**Europäisches Patentamt**

**European Patent Office**

**Office européen des brevets**

(19)

(11) Numéro de publication: **0 041 881**
**A1**

(12)

# DEMANDE DE BREVET EUROPEEN

(21) Numéro de dépôt: **81400820.7**

(22) Date de dépôt: **22.05.81**

(51) Int. Cl.³: **C 08 L 95/00**
**E 01 C 7/18**

---

(30) Priorité: **05.06.80 FR 8012554**

(43) Date de publication de la demande:
**16.12.81 Bulletin 81/50**

(84) Etats contractants désignés:
**AT BE CH DE GB IT LI LU NL SE**

(71) Demandeur: **TRAVAUX ET PRODUITS ROUTIERS**
**7, rue de Monceau**
**F-75008 Paris(FR)**

(72) Inventeur: **Langumier, Georges**
**14-16, rue Félicien David**
**F-78100 Saint Germain-en-Laye(FR)**

(74) Mandataire: **Phélip, Bruno et al,**
**c/o Cabinet HARLé & LECHOPIEZ 21, rue de La**
**Rochefoucauld**
**F-75009 Paris(FR)**

---

(54) **Mélanges bitumineux à très hautes performances leur procédé d'obtention et leur application.**

(57) Les mélanges sont caractérisés en ce qu'ils sont constitués d'une composition granulaire à base de granulats de roche dure et d'un liant composé de bitumes trés durs et d'éventuels additifs appliqués à un dosage correspondant à un module de richesse corrigé compris dans la gamme de 3,8 à 4,5 conformément à la relation : teneur en liant = $K \sqrt[5]{\Sigma}.\alpha$, où
$\Sigma$ = surface spécifique conventionnelle des granulats = $0,25 G + 2,3 S + 12 s + 135 f$, en m²/kg avec les proportions pondérales:
G des éléments supérieurs à 6 mm
S des éléments compris entre 6 et 0,315 mm
s des éléments compris entre 0,315 et 0,08 mm
f des éléments inférieurs à 0,08 mm
K = module de richesse corrigé
$\alpha$ = coefficient correcteur destiné à tenir compte de la masse volumique des granulats, $\alpha$ étant égal à 2,65/masse volumique du granulat.
Application aux revêtements routiers.

EP 0 041 881 A1

1

Mélanges bitumineux à très hautes performances, leur
procédé d'obtention et leur application

La présente invention concerne des mélanges
bitumineux à très hautes performances, leur procédé
d'obtention et leur application.

Dans tous les pays, la réglementation
routière autorise la circulation de véhicules dotés
d'essieux lourds même si la limite est plus ou moins
élevée selon les pays. La présence de telles charges
rend nécessaire l'emploi de mélanges bitumineux à
forte résistance au fluage sur les chaussées à trafic
lourd et intense. Il est essentiel d'assurer une
durée de service suffisante. Cela implique l'utilisation d'une quantité importante de mélange bitumineux.

Cependant, diverses contraintes rendent
parfois nécessaire l'application d'une épaisseur
de mélange bitumineux bien plus faible que l'épaisseur de mélange bitumineux classique indispensable
pour atteindre la durée de service nécessaire.

Les caractéristiques d'un mélange bitumineux ayant, à épaisseur réduite, le même effet qu'un
mélange bitumineux classique en épaisseur normale,
doivent être améliorées dans deux domaines :

 - celui du module en flexion qui doit être
accru ;

 - celui de la capacité de déformation sous
charges répétées qui doit être augmentée.

La présente invention a pour objet des
mélanges bitumineux à très hautes performances,
qui satisfont aux conditions exposées ci-dessus tant
dans le domaine de la résistance au fluage que dans
les domaines du module et de la résistance à la
fatigue.

Il est bien connu que trois paramètres principaux déterminent la composition des mélanges
bitumineux, à savoir :

       - le volume d'agrégats VA

       - le volume de liant VL

       - le volume de vides v

Dans le rapport du XVIe Congrès Mondial
de la Route du 16 au 21 septembre 1979 à Vienne
(Autriche), il a été précisé ce qui suit :

       - les mélanges bitumineux qui résistent
le mieux à l'orniérage sont ceux dont la susceptibilité du module en compression à la température est
aussi faible que possible.

Cette condition peut notamment être satisfaite par l'emploi de bitumes durs, la recherche d'un
grand rapport entre la teneur volumique en granulats
et la teneur volumique en liant (VA/VL) et un faible
pourcentage de vide s(v) ;

       - les mélanges bitumineux résistant à
l'orniérage et satisfaisant à la condition énoncée
ci-dessus (VA/VL grand, v petit, bitume dur), s'ils
sont posés en épaisseur adéquate, résistent également
à la fissuration par fatigue. En matière de fatigue,
il faut toutefois éviter l'utilisation de bitumes
trop durs (soit naturellement, soit par vieillissement) dont les compositions pourraient être le siège
de fissurations d'origine thermique ;

       - outre les caractéristiques du bitume,
les deux paramètres de composition régissant le
phénomène de fatigue et le phénomène de déformation
permanente sont le rapport VA/VL et le pourcentage
de vides v.L'obtention simultanée d'un grand rapport
VA/VL et d'un faible pourcentage de vides v est
conditionnée par la granulométrie, la forme des
granulats et l'efficacité du compactage ;

       - tout mélange réalisant un grand rapport VA/VL mais un grand pourcentage de vides $\underline{v}$ peut être résistant à l'orniérage mais faible vis-à-vis de la fissuration et de la durabilité en général.

Par ailleurs, les recherches effectuées par la demanderesse ont abouti aux conclusions suivantes :

- les mélanges caractérisés par une faible teneur en liant nécessaire à l'obtention d'un grand rapport VA/VL possèdent un module de rigidité dont la valeur est élevée et une forte résistance au fluage ;

- de tels mélanges ont une résistance à la fatigue d'autant plus réduite que leur module de rigidité est plus élevé.

La demanderesse a ainsi constaté qu'une orientation des recherches selon l'opinion couramment répandue ne permettait pas d'obtenir des mélanges bitumineux à très hautes performances.

Contrairement aux enseignements de la technique antérieure , la demanderesse s'est engagée dans une voie inattendue et elle a trouvé de façon très surprenante que l'emploi d'un bitume très dur ne présentait pas d'inconvénient du point de vue de la fissuration, contrairement aux connaissances actuelles, à condition de faire appel à un dosage en liant élevé.

Selon l'invention, on a ainsi obtenu des résultats à la fois inattendus et remarquables en utilisant des bitumes très durs à des dosages très élevés, ce qui conduit à des valeurs relativement faibles de VA/VL.

L'état actuel de la technique ne permettait pas de prévoir que de tels mélanges bitumineux dont la composition est différente de ce qui était préconisé donneraient satisfaction.

Les mélanges bitumineux selon la présente invention présentent :

-un module de rigidité très élevé ;

- une très grande capacité de déformation sous charges alternées ;

- une très forte résistance au fluage.

Il s'agit là des caractéristiques recherchées pour des mélanges bitumineux à très hautes performances.

Conformément à la présente invention, les mélanges bitumineux à très hautes performances résistant à l'orniérage et à la fissuration sont caractérisés en ce qu'ils sont constitués d'une composition granulaire à base de granulats de roche dure et d'un liant composé de bitumes très durs et d'éventuels additifs, utilisé à dosage correspondant à un module de richesse corrigé compris dans la gamme de 3,8 à 4,5 conformément à la relation :

$$\text{teneur en liant} = K \sqrt[5]{\Sigma} . \alpha ,$$

où $\Sigma$ = surface spécifique conventionnelle des granulats = $0,25\ G + 2,3\ S + 12\ s + 135\ f$, en $m^2/kg$ avec les proportions pondérales :

G des éléments supérieurs à 6 mm

S des éléments compris entre 6 et 0,315 mm

s des éléments compris entre 0,315 et 0,08mm

f des éléments inférieurs à 0,08 mm

K = module de richesse corrigé

$\alpha$ = coefficient correcteur destiné à tenir compte de la masse volumique des granulats, $\alpha$ étant égal à 2,65/masse volumique du granulat.

Il y a lieu d'observer que, selon la présente invention, on peut utiliser des granulats de diverses natures. Les granulats qui conviennent le mieux sont les porphyres, les calcaires et analogues.

Diverses caractéristiques spécifiques prises isolément ou en combinaison des mélanges bitumineux de la présente invention sont énumérées ci-après :

- la composition granulaire comprend des gravillons 10/20, 6/10, 2/6, un sable 0/2 et un filler calcaire mélangés dans les proportions suivantes :

| Gravillons | 10/20 | 35 à 45 % |
|---|---|---|
|  | 6/10 | 10 à 20 % |
|  | 2/6 | 10 à 15 % |
| Sable | 0/2 | 25 à 35 % |
| Filler |  | 0 à 5 % |

le mélange ainsi constitué étant un 0/20 (2 % de refus au tamis de 20 mm d'ouverture de mailles) ;

- le liant a une température bille et anneau de 70 à 90°C, une pénétrabilité à 25°C de 5 à 20, un indice de pénétration PFEIFFER $>$ 1 et une température d'enrobage de l'ordre de 175°C ;

- le module de rigidité est compris dans la gamme de 160.000 à 240.000 bars (16 à 24 x $10^9$ pascals);

- la capacité de déformation sous charges alternées est comprise dans la gamme de 200 à 300 $\mu$D ; ( $\mu$D =microdéformations)

- la résistance au fluage est comprise dans la gamme de 1 à 6 mm après 100.000 cycles dans l'essai d'orniérage L.P.C. pratiqué à 50°C sur des plaques de 10 cm d'épaisseur ;

- l'additif éventuel ajouté au liant est généralement un copolymère séquencé styrène-butadiène-styrène ou d'éthylène-acétate de vinyle.

La présente invention concerne également un procédé d'obtention de tels mélanges bitumineux qui consiste à chauffer le mélange de granulats à une température d'environ 160 à 190°C et à incorporer dans lesdits granulats le liant à une température comprise dans la gamme de 170 à 200°C puis à malaxer le mélange pendant 20 à 60 secondes.

Selon d'autres caractéristiques de la présente invention, les granulats sont entièrement secs et chauffés, leur teneur en eau étant inférieure à 0,5 %.

Le procédé de l'invention consiste en outre à incorporer l'additif éventuel directement dans le mélange ou au préalable dans le liant avant le malaxage et l'incorporation du liant dans les granulats.

Cet additif éventuel est habituellement un copolymère séquencé de styrène-butadiène-styrène ou d'éthylène-acétate de vinyle.

La présente invention est aussi relative l'application de tels mélanges bitumineux à raison d'une épaisseur d'environ 8 à 20 cm, plus généralement comprise entre 10 et 15 cm.

La mise au point des mélanges bitumineux selon l'invention diffère totalement des techniques selon l'art antérieur. Cette mise au point consiste à réaliser les opérations suivantes :

- pour une composition granulaire donnée et pour un liant donné, on recherche la teneur en liant maximale assurant une bonne résistance au fluage ;

- pour la même composition granulaire, on effectue la même recherche avec des liants de plus en plus durs ou de plus en plus chargés en polymères.

Conformément à ces études, on a trouvé une bonne résistance au fluage pour un dosage en liant correspondant à un module de richesse corrigé compris entre 3,8 et 4,5.

Les exemples ci-après illustrent la présente invention sans aucunement la limiter.

EXEMPLE 1

### A. Granulats

Les granulats utilisés sont des gravillons 10/20, 6/10, 2/6, un sable 0/2 et un filler calcaire. Les gravillons et le sable proviennent de la carrière de la Meillerrie-Tillay en Vendée (France). Le filler est un filler calcaire couramment utilisé dans les formules granulaires.

### B. Caractéristiques des granulats

Des échantillons ont été prélevés sur les stocks existant en carrière en vue d'une étude préalable.

Les essais d'identification pratiqués sur ces échantillons ont donné les résultats indiqués dans le tableau 1 ci-après.

Le sable 0/2 contient 16 % de fines. Son équivalent de sable 49, est très nettement supérieur au minimum exigé pour les sables, contenant plus de 15 % de filler pour la réalisation des assises de chaussées : soit 35.

La texture des faces, granuleuse, est un élément favorable à la résistance à l'orniérage.

Le coefficient Los Angeles a une valeur inférieure à 11. Les gravillons ont une dureté qui satisfait aux spécifications pour couches de roulement, y compris dans le cas des trafics les plus lourds et les plus intenses.

Les quatre fractions granulaires sont entièrement concassées.

Les granulats sont mélangés dans les proportions suivantes :

| Gravillons | 10/20 | 35 à 45 % |
| Gravillons | 6/10  | 10 à 20 % |
| Gravillons | 2/6   | 10 à 15 % |
| Sable      | 0/2   | 25 à 35 % |

Filler                            0 à 5 %

Le mélange ainsi constitué est un 0/20 = 2 % de refus à 20 mm. Sa composition granulométrique est indiquée dans le tableau ci-dessous :

| Côté des mailles des tamis en mm | Pourcentage d'éléments passant aux tamis |
|---|---|
| 20 | 98 |
| 12,5 | 73 |
| 10 | 62 |
| 4,0 | 42 |
| 2,0 | 32 |
| 1,0 | 22 |
| 0,500 | 16 |
| 0,200 | 11 |
| 0,080 | 8,4 |

EXEMPLE 2

Liant

Le liant utilisé est composé à partir de bitumes de distillation directe et d'additif. Il est spécialement préparé pour la fabrication de graves-bitume à très hautes performances.

Les caractéristiques du bitume spécial sont comparées, dans le tableau 2, à celles de trois bitumes routiers témoins qui couvrent la gamme de l'ensemble des bitumes routiers classiques.

## TABLEAU 1

| | 10/20 6/10 2/6 : 0/2 | | SPECIFICATIONS | | | FILLER |
|---|---|---|---|---|---|---|
| Nature | microdiorite | | L.A. en fonction des classes du trafic définies dans le Catalogue de Structures -types de chaussées (édition 1977) | | | calcaire |
| Poids spécifique des grains | 2,91 | 2,9 | | | | - |
| Pourcentage d'éléments insolubles dans l'acide chlorhydrique | 100 | | Tl à T3 | TO | | $\simeq 0$ |
| Coefficient LOS ANGELES | 6 à 11 | | $<30$ | $<25$ | | - |
| Coefficient de forme des gravillons | - | - | E.S en fonction du pourcentage de filler dans la fraction 0/2 | | | - |
| Angularité | entièrement concassé | | | | | - |
| Texture des faces | granuleuse | | $<12$ % | 12 à 15 % | $\geq 15$ % | - |
| Equivalent de sable mesuré sur le sable lui-même | - | 49 | >45 | >40 | $\geq 35$ | - |

## TABLEAU 2

| LIANTS | Bitume de l'invention | Bitumes témoins | | |
|---|---|---|---|---|
| | | 20/30 | 60/70 | 180/220 |
| Température bille et anneau | 70 à 90°C | 52-65°C | 43-56°C | 39-48°C |
| Pénétrabilité à 25°C | 5 à 20 | 18 | 64 | 200 |
| Indice de pénétration PFEIFFER | > 1 | – 0,3 | – 0,3 | – 0,5 |
| Température d'enrobage | 175°C | 170°C | 145°C | 130°C |

La température bille et anneau, plus élevée que celle du 20/30, indique que le liant spécial reste plus consistant que le 20/30 à une température élevée (60°C), ce qui permet d'obtenir la non-déformation du revêtement par fluage.

La température d'enrobage du liant spécial est de 175°C, légèrement supérieure à la température d'enrobage d'un bitume 20/30.

EXEMPLE 3

Essais de comportement

On effectue les essais suivants:
- détermination des caractéristiques que l'enrobé aura en place dans l'immédiat et vérification de la tenue à l'eau des enrobés (essai DURIEZ dilaté selon modes opératoires Juin 1979 du Laboratoire Central des Ponts et Chaussées),

- détermination des caractéristiques que l'enrobé en place aura à terme (essai Marshall, selon modes opératoires décembre 1972 du Laboratoire Central des Ponts et Chaussées).

- vérification de la tenue à l'orniérage ;

- détermination des caractéristiques en traction pure.

Les caractéristiques générales sont les suivantes :

- dosage en liant retenu (P)...... 6 %
- densité théorique (DT).......... 2,66
- surface spécifique $\Sigma$ = 13,2 m²/kg ;

$\sqrt[5]{\Sigma}$ = 1,67

- module de richesse corrigé :

$$K = \frac{2,91}{2,65} \cdot \frac{6}{1,67} = 3,95$$

1. Essais Duriez

a) caractéristiques des éprouvettes type "DURIEZ DILATE"

Des essais de comportement sont effectués sur les éprouvettes "Duriez Dilaté" pour montrer que les mélanges bitumineux de l'invention sont satisfaisants.

Les mélanges préparés sont malaxés pendant une minute environ.

Les éprouvettes sont réalisées en maintenant une charge de 18 tonnes pendant 5 minutes, puis elles sont démoulées 24 heures après leur confection. On les classe ensuite de façon à constituer trois séries dont la densité moyenne est la même. Leurs caractéristiques sont les suivantes :

Densité apparente hydrostatique (Da)..... 2,25

Pourcentage de vides (V)................. 4 %

Compacité (C)............................ 96%

Coefficient de remplissage (CR).......... 77%

b) Immersion-compression

La première série de 3 éprouvettes est écrasée après 7 jours de conservation à l'air après démoulage.

L'effort maximum à la rupture en compression simple, ramené à la surface de la section droite de l'éprouvette, à 18°C et 1 mm/s après conservation pendant 8 jours à l'air, $R_c$, s'élève à 220 bars.

La deuxième série de 3 éprouvettes est immergée, après dégazage, durant 7 jours au bout desquels on la sort de l'eau.

Les éprouvettes sont écrasées, puis la teneur en eau est déterminée.Les mesures donnent les résultats suivants :

- l'effort maximum à la rupture en compression simple, ramené à la surface de la section droite de l'éprouvette, à 18°C et 1 mm/s, après conservation pendant 24 heures dans l'air plus 7 jours dans l'eau (R'c) s'élève à 221 bars.

- la teneur en eau au moment de l'écrasement après immersion est de 0,4 %.

- le coefficient de réduction immersion-compression $ic = R'c/Rc = 1$.

2. <u>Compression diamétrale</u>

Une autre série de 3 éprouvettes est conservée durant 8 jours à l'air puis écrasée en compression diamétrale à 18°C et 1 mm/s : l'effort maximal en compression diamétrale Rt s'élève à 55 bars.

Les mélanges bitumineux de l'invention sont excellents tant du point de vue de la résistance en compression simple et en compression diamétrale que de leur tenue à l'eau.

3. <u>Essais Marshall</u>

Les essais réalisés dans les conditions normalisées ont donné les résultats ci-après :

| Nombre de coups donnés | 50 | 100 |
|---|---|---|
| Densité apparente hydrostatique | 2,54 | 2,57 |
| Compacité (c) | 95,5 % | 96,6 % |
| Vides (V) | 4,5 % | 3,4 % |
| Stabilité (daN) | 2900 | 3100 |

4. <u>Essai d'orniérage</u>

La tenue à l'orniérage est examinée en simulant l'action du trafic à l'aide d'un orniéreur sur des plaques de 500 x 180 x 100 mm fabriquées en laboratoire.

a) <u>caractéristiques des éprouvettes</u>

Les essais sont effectués sur deux plaques de 10 cm compactées, en cherchant à obtenir 100 % de la compacité. Les caractéristiques des plaques sont les suivantes :

| épaisseur (cm) | 10 |
|---|---|
| densité apparente géométrique | 2,55 |

compacité relative par rapport
à la densité DURIEZ                     102 %
Pourcentage de vides géométriques                                      4 %

b) conditions de l'essai

Les essais sont réalisés en appliquant une charge de 500 daN par l'intermédiaire d'une roue dont le pneumatique est gonflé à 6 bars et qui est animée d'un mouvement alternatif de translation à la fréquence de 1 Hz, durant 100.000 cycles (200.000 passages) à 50°C conformément aux normes d'essai pour les mélanges destinés à des assises de base.

Pression de gonflage          6 bars
Charge appliquée              500 daN
Angle de ripage                 0°
Fréquence du mouvement          1 Hz
Température                    50°C

c) mesure de la profondeur d'ornière

La profondeur des ornières est mesurée en comparant, au relevé initial, les relevés établis sur trois profils, à l'aide d'un mini-transversoprofilographe, après avoir soumis chaque éprouvette à:

1.500 cycles ou 3.000 passages de roues
6.000 cycles ou 12.000 passages de roues
25.000 cycles ou 50.000 passages de roues
100.000 cycles ou 200.000 passages de roues

Les résultats obtenus sont exprimés en mm dans le tableau ci-dessous :

| Nombre de cycles | Enfoncement en mm par rapport au profil initial |
|---|---|
| 400 | 1,2 |
| 1.500 | 1,8 |
| 6.000 | 2,8 |

| 25.000 | 3,7 |
| 100.000 | 4,4 |

La profondeur très limitée de l'ornière : 4,4 mm à 50°C, indique un comportement remarquable pour les mélanges bitumineux de l'invention même si le revêtement est mince.

L'invention n'est pas limitée aux modes de réalisation représentés et décrits en détails et diverses variantes peuvent y être apportées sans sortir de son cadre.

## REVENDICATIONS

1. Mélanges bitumineux à très hautes performances résistant à l'orniérage et à la fissuration, caractérisés en ce qu'ils sont constitués d'une composition granulaire à base de granulats de roche dure et d'un liant composé de bitumes très durs et d'éventuels additifs appliqués à un dosage correspondant à un module de richesse corrigé compris dans la gamme de 3,8 à 4,5 conformément à la relation : teneur en liant = K $\sqrt[5]{\Sigma} . \alpha$

où $\Sigma$ = surface spécifique conventionnelle des granulats = 0,25 G + 2,3 S + 12 s + 135 f, en m²/kg avec les proportions pondérales :

G des éléments supérieurs à 6 mm

S des éléments compris entre 6 et 0,315 mm

s des éléments compris entre 0,315 et 0,08 mm

f des éléments inférieurs à 0,08 mm

K =module de richesse corrigé

$\alpha$ = coefficient correcteur destiné à tenir compte de la masse volumique des granulats, $\alpha$ étant égal à 2,65/masse volumique du granulat.

2. Mélanges bitumineux selon la revendication 1, caractérisés en ce que le liant a une température bille et anneau de 70° à 90°C, une pénétrabilité à 25°C de 5 à 20, un indice de pénétration PFEIFFER $>$ 1 et une température d'enrobage de 175°C.

3. Mélanges bitumineux selon l'une des revendications 1 ou 2, caractérisés en ce que le module de rigidité est compris dans la gamme de 160.000 à 240.000 bars (16 à 24 x $10^9$Pa).

4. Mélanges bitumineux selon l'une quelconque des revendications 1 à 3, caractérisés en ce que la capacité de déformation sous charges alternées est comprise dans la gamme de 200 à 300 $\mu$D.

5. Mélanges bitumineux selon l'une quelconque des revendications 1 à 4, caractérisés en ce que la résistance au fluage est comprise dans la gamme de 1 à 6 mm.

6. Mélanges bitumineux selon l'une quelconque des revendications 1 à 5, caractérisés en ce que l'additif utilisé est un copolymère séquencé styrène-butadiène-styrène ou d'éthylène-acétate de vinyle.

7. Mélanges bitumineux selon l'une quelconque des revendications 1 à 6, caractérisés en ce que la composition granulaire comprend des gravillons 10/20, 6/10, 2/6, un sable 0/2 et un filler calcaire mélangés dans les proportions suivantes :

| | | |
|---|---|---|
| Gravillons | 10/20 | 35 à 45 % |
| Gravillons | 6/10 | 10 à 20 % |
| Gravillons | 2/6 | 10 à 15 % |
| Sable | 0/2 | 25 à 35 % |
| Filler | | 0 à 5 % |

le mélange ainsi constitué étant un 0/20 (2 % de refus au tamis de 20 mm d'ouverture).

8. Procédé d'obtention de mélanges bitumineux selon l'une quelconque des revendications 1 à 7, caractérisé en ce qu'il consiste à chauffer le mélange de granulats à une température d'environ 160 à 190°C et à incorporer dans lesdits granulats le liant à une température comprise dans la gamme de 170 à 200°C puis à malaxer le mélange pendant 20 à 60 secondes.

9. Procédé selon la revendication 8, caractérisé en ce que les granulats sont entièrement secs et chauffés, leur teneur en eau étant inférieure à 0,5 %.

10. Procédé selon l'une des revendications 8 ou 9, caractérisé en ce qu'il consiste en outre à incorporer un copolymère directement dans le mélange ou au préalable dans le liant avant le malaxage et l'incorporation du liant dans les granulats.

11. Application des mélanges bitumineux selon l'une quelconque des revendications 1 à 7, à raison d'une épaisseur d'environ 8 à 20 cm, plus généralement comprise entre 10 et 15 cm.

# RAPPORT DE RECHERCHE EUROPEENNE

**0041881**
Numéro de la demande

EP 81 40 0820

| | DOCUMENTS CONSIDERES COMME PERTINENTS | | CLASSEMENT DE LA DEMANDE (Int. Cl.³) |
|---|---|---|---|
| Catégorie | Citation du document avec indication, en cas de besoin, des parties pertinentes | Revendication concernée | |
| A | FR - A - 1 413 210 (TRAVAUX et PRODUITS ROUTIERS) <br><br> * page 2, résumé * <br><br> --- | | C 08 L 95/00 <br> E 01 C 7/18 |
| A | FR - A - 1 456 002 (TRAVAUX et PRODUITS ROUTIERS) <br><br> * résumé * <br><br> --- | | |
| A | GB - A - 452 998 (SOC. ANONIMA GIOVANNI DELLA COLETTA) | | **DOMAINES TECHNIQUES RECHERCHES (Int. Cl.³)** <br><br> C 08 L 95/00 <br> E 01 C 7/18 <br> 7/26 |
| A | FR - A - 2 071 084 (C.F.R.) <br><br> ------- | | |

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 15-09-1981 | GIRARD |

OEB Form 1503.1 06.78